(19) Europäisches Patentamt
European Patent Office
Office européen des brevets

(11) EP 4 513 586 A1

(12) EUROPEAN PATENT APPLICATION

(43) Date of publication:
26.02.2025 Bulletin 2025/09

(21) Application number: 24167894.5

(22) Date of filing: 29.03.2024

(51) International Patent Classification (IPC):
H01M 4/133 (2010.01) H01M 4/587 (2010.01)
H01M 4/62 (2006.01) H01M 10/0525 (2010.01)
H01M 10/0567 (2010.01) H01M 10/0568 (2010.01)
H01M 10/42 (2006.01) H01M 4/02 (2006.01)

(52) Cooperative Patent Classification (CPC):
H01M 10/0567; H01M 4/133; H01M 4/587; H01M 4/622; H01M 4/623; H01M 10/0525; H01M 10/0568; H01M 10/4235; H01M 2004/027; H01M 2300/0025

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 24.08.2023 CN 202311074945

(71) Applicant: Ningde Amperex Technology Ltd.
Ningde City, Fujian 352100 (CN)

(72) Inventors:
- CAI, Xin
Ningde City, Fujian Province, People s Republic of
China, 352100 (CN)
- CUI, Hui
Ningde City, Fujian Province, People s Republic of
China, 352100 (CN)
- TANG, Chao
Ningde City, Fujian Province, People s Republic of
China, 352100 (CN)

(74) Representative: Icosa
83 avenue Denfert-Rochereau
75014 Paris (FR)

# (54) ELECTROCHEMICAL APPARATUS AND ELECTRIC DEVICE

(57) An electrolyte of the electrochemical apparatus includes a linear carboxylate compound and a dinitrile compound. Based on total mass of the electrolyte, a mass percentage a of the linear carboxylate compound is 20% to 70% and a mass percentage b of the dinitrile compound is 0.01%-7%; a bonding force between a negative electrode active material layer and a negative electrode current collector of a negative electrode plate is peeling strength, where the peeling strength F measured in N/m is 5 N/m-20 N/m; and the mass percentage a of the linear carboxylate compound, the mass percentage b of the dinitrile compound, and the peeling strength F satisfy a relation $0.14 \leq (100b+F)/100a \leq 1.3$

EP 4 513 586 A1

## Description

## TECHNICAL FIELD

This application relates to the field of electrochemical apparatus technologies, and in particular, to an electrochemical apparatus and an electric device.

## BACKGROUND

Rechargeable electrochemical apparatuses are considered one of the most attractive energy storage systems due to advantages such as high energy density, relatively simple reaction mechanism, high operating voltage, long service life, and environmental friendliness. At present, electrochemical apparatuses such as lithium-ion batteries have been widely used in various fields including wearable devices, smartphones, drones, laptops, and the like.

With the increasingly extensive application of electrochemical apparatuses, the market has raised higher requirements for the performance of electrochemical apparatuses. Taking smartphones as an example, the electrochemical apparatuses are developing towards fast charging and high performance. On the one hand, electrochemical apparatuses are required to provide high kinetic performance in order to accommodate faster charging; on the other hand, the electrochemical apparatuses need to have good high-temperature performance because smartphones generate a large amount of heat when operating in a high-power consumption state.

## SUMMARY

This application is intended to provide an electrochemical apparatus and an electric device, so as to increase the charging speed and improve the high-temperature cycling performance, hotbox performance, and high-temperature full charge storage stability of the electrochemical apparatus. Specific technical solutions are as follows.

According to a first aspect of this application, an electrochemical apparatus is provided, including a positive electrode plate, an electrolyte, and a negative electrode plate. The electrolyte contains a linear carboxylate compound and a dinitrile compound, and the negative electrode plate includes a negative electrode current collector and a negative electrode active material layer disposed on at least one surface of the negative electrode current collector. Based on total mass of the electrolyte, a mass percentage a of the linear carboxylate compound is 20%-70% and a mass percentage b of the dinitrile compound is 0.01%-7%; a bonding force between the negative electrode active material layer and the negative electrode current collector is peeling strength, where the peeling strength F measured N/m is 5 N/m-20 N/m; and the mass percentage a of the linear carboxylate compound, the mass percentage b of the dinitrile compound, and the peeling strength F measured in N/m satisfy a relation $0.14 \leq (100b+F)/100a \leq 1.35$.

In the electrochemical apparatus of this application, the linear carboxylate compound (with no ring formed by ester groups) can reduce the viscosity of the electrolyte system and improve the kinetics of the electrochemical apparatus to a certain extent. However, the compound causes a binder on the negative electrode plate to swell to some extent, thereby affecting peeling strength of the negative electrode plate and reducing the strength of bonding between the negative electrode active material layer and the negative electrode current collector. This hinders efficient transport of electrons, thereby affecting the fast charging performance. Therefore, when the peeling strength of the negative electrode plate and the linear carboxylate compound are limited to being within the foregoing range, close contact can be achieved between the negative electrode active material layer and the negative electrode current collector, so as to satisfy the fast charging performance to some extent. In addition, the high-temperature performance of the linear carboxylate compound is relatively unsatisfying. The dinitrile compound can effectively improve the high-temperature performance and enhance the adhesion of the negative electrode plate as well, thereby further improving the fast charging performance of the electrochemical apparatus. Therefore, in this application, the mass percentage a (a is 20%-70%) of the linear carboxylate compound, the mass percentage b (b is 0.01%-7%) of the dinitrile compound, and the peeling strength F measured in N/m (F measured in N/m is 5 N/m-20 N/m) satisfy the relation $0.14 \leq (100b+F)/100a \leq 1.35$. In this case, the electrochemical apparatus features a high charging speed, and has good high-temperature cycling performance, hotbox performance, and high-temperature full charge storage stability.

In some embodiments of this application, a is 21%-49%. This can further increase the charging speed of the electrochemical apparatus while maintaining good high-temperature cycling performance and high-temperature full charge storage stability of the electrochemical apparatus.

In some embodiments of this application, b is 1.1%-4.9%. This can further improve the high-temperature cycling performance and high-temperature full charge storage stability of the electrochemical apparatus.

In some embodiments of this application, F measured in N/m is 7.1 N/m-15.5 N/m. This can further increase the charging speed of the electrochemical apparatus and improve the high-temperature cycling performance of the electrochemical apparatus.

In some embodiments of this application, a is 36%-43%. This can further increase the charging speed of the electrochemical apparatus while maintaining good high-temperature cycling performance and high-temperature full charge storage stability of the electrochemical apparatus.

In some embodiments of this application, b is 2.1%-4.1%. This can further improve the high-temperature cycling performance and high-temperature full charge storage stability of the electrochemical apparatus.

In some embodiments of this application, F measured in N/m is 8.2 N/m-13.7 N/m. This can further increase the charging speed of the electrochemical apparatus and improve the high-temperature cycling performance of the electrochemical apparatus.

In some embodiments of this application, a, b, and F measured in N/m satisfy a relation $0.21 \le (100b+F)/100a \le 0.39$. This can further improve the high-temperature performance of the electrochemical apparatus.

In some embodiments of this application, a, b, and F measured in N/m satisfy a relation $0.23 \le (100b+F)/100a \le 0.33$. This can further improve the high-temperature performance of the electrochemical apparatus.

In some embodiments of this application, the linear carboxylate compound includes at least one of ethyl acetate, methyl propionate, isopropyl formate, ethyl propionate, propyl acetate, isopropyl acetate, methyl butyrate, methyl isobutyrate, propyl propionate, isopropyl propionate, ethyl butyrate, ethyl isobutyrate, butyl acetate, isobutyl acetate, and a fluorine-substituted products thereof.

In some embodiments of this application, the dinitrile compound includes at least one of succinonitrile, glutaronitrile, adiponitrile, heptanedinitrile, octanedinitrile, 2-methylglutaronitrile, dipropylmalononitrile, and 1,2-bis(cyanoethoxy)ethane.

In some embodiments of this application, the electrolyte contains succinonitrile and adiponitrile. Adding the foregoing compounds can further increase the capacity retention rate of the electrochemical apparatus and balance the charging speed and the hotbox temperature.

In some embodiments of this application, the electrolyte contains adiponitrile and 1,2-bis(cyanoethoxy)ethane. Adding the foregoing compounds can further increase the capacity retention rate of the electrochemical apparatus and balance the charging speed and the hotbox temperature.

In some embodiments of this application, the electrolyte contains ethyl acetate and adiponitrile. Adding the foregoing compounds can further increase the capacity retention rate of the electrochemical apparatus and balance the charging speed and the hotbox temperature.

In some embodiments of this application, the electrolyte further contains a compound of formula I. Based on the total mass of the electrolyte, a mass percentage c of the compound of formula I is 0.04%-0.8% and satisfies a relation $0.01 \le 10c/a \le 0.2$ with a. A structural formula of the compound of formula I is:

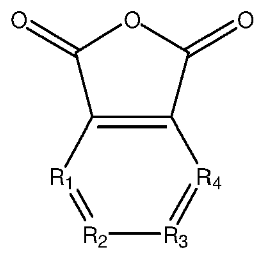
formula I;

where, $R_1$, $R_2$, $R_3$, and $R_4$ each are independently selected from N or C-$R_5$; $R_5$ is independently selected from hydrogen, substituted or unsubstituted C1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen.

When the compound represented by the foregoing general formula is added, the capacity retention rate of the electrochemical apparatus can be further increased, and the charging speed and the hotbox temperature can be balanced by controlling the proportion of the compound.

In some embodiments of this application, the compound of formula I includes at least one of substances represented by the following chemical formulae:

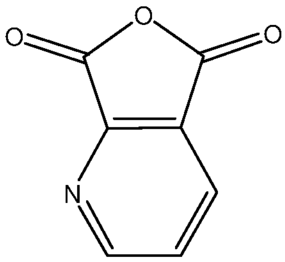 formula I-1, 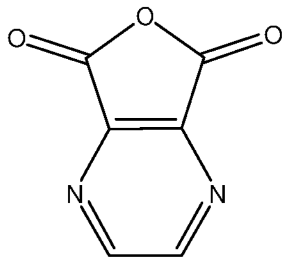 formula I-2,

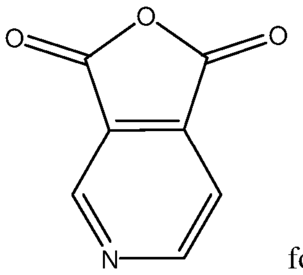 formula I-3,

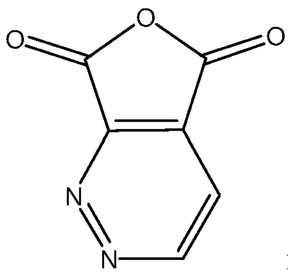 formula I-4, and 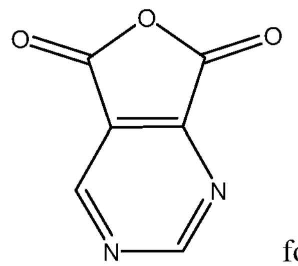 formula I-5.

The foregoing compounds can greatly improve the high-temperature cycling performance and hotbox performance of the electrochemical apparatus.

In some embodiments of this application, the electrolyte further contains a trinitrile compound. Based on the total mass of the electrolyte, a mass percentage d of the trinitrile compound is 0.01%-5%, and d and b satisfy a relation $0.0014 \leq d/b \leq 3$. When the trinitrile compound is added, the high-temperature cycling performance and high-temperature full charge storage stability of the electrochemical apparatus is further improved, and the mass percentage of the trinitrile compound is controlled to balance the overall impedance of the electrochemical apparatus.

In some embodiments of this application, the trinitrile compound includes at least one of 1,3,5-pentanetricarbonitrile, 1,3,6-hexanetricarbonitrile, 1,2,6-hexanetricarbonitrile, or 1,2,3-tris(2-cyanooxy)propane. The foregoing compound can further improve the high-temperature cycling performance and high-temperature full charge storage stability of the electrochemical apparatus.

In some embodiments of this application, the electrolyte further contains lithium difluorophosphate, and based on the mass of the electrolyte, a mass percentage e of the lithium difluorophosphate is 0.01%-1%. Lithium difluorophosphate can participate in the formation of SEI film at the negative electrode plate and the formation of CEI film at the positive electrode plate, so as to form a stable solid electrolyte interface rich in F, inhibiting the oxidation reaction between the linear carboxylate compound and the dinitrile compound at the positive electrode plate and co-embedding at the negative electrode plate. In addition, lithium difluorophosphate can inhibit the decomposition of lithium hexafluorophosphate by affecting the hydrolysis reaction balance of lithium hexafluorophosphate. This reduces the acidity of the electrolyte and reduces the corrosion of the negative electrode current collector, thereby ensuring the peeling strength of the negative electrode plate and further improving the charging speed of the electrochemical apparatus.

In some embodiments of this application, the negative electrode active material layer includes a negative electrode material, a binder, and a conductive agent, where the negative electrode material includes graphite, and a specific surface area f of the graphite is 1 $m^2/g$-6 $m^2/g$. In this case, the electrolyte retention of the negative electrode plate is appropriate so that swelling of the binder on the negative electrode plate by the electrolyte can be controlled, thereby further improving the high-temperature cycling performance and high-temperature full charge storage stability of the electrochemical apparatus.

In some embodiments of this application,the negative electrode active material layer includes a negative

electrode material, a binder, and a conductive agent, and the binder includes at least one of styrene butadiene rubber, fluorinated rubber, polyacrylonitrile, polyacrylic acid, polyacrylate, polyvinyl alcohol, polytetrafluoroethylene, or polyolefin. In this case, the negative electrode plate has good adhesion and adequate peeling strength.

According to a second aspect of this application, an electric device is provided including the electrochemical apparatus according to any one of the foregoing embodiments. As a result, the electric device provided in this application has good performance in use.

**DESCRIPTION OF EMBODIMENTS**

To make the objectives, technical solutions, and advantages of this application more comprehensible, the following describes this application in detail with reference to embodiments. Apparently, the described examples are merely some but not all of the examples of this application. All other embodiments obtained by persons of ordinary skill in the art based on the embodiments of this application shall fall within the protection scope of this application.

This application provides an electrochemical apparatus, including a positive electrode plate, an electrolyte, and a negative electrode plate. The electrolyte contains a linear carboxylate compound and a dinitrile compound, and the negative electrode plate includes a negative electrode current collector and a negative electrode active material layer disposed on at least one surface of the negative electrode current collector. Based on total mass of the electrolyte, a mass percentage a of the linear carboxylate compound is 20%-70% and a mass percentage b of the dinitrile compound is 0.01%-7%; a bonding force between the negative electrode active material layer and the negative electrode current collector is peeling strength, where the peeling strength F measured in N/m is 5 N/m-20 N/m; and the mass percentage a of the linear carboxylate compound, the mass percentage b of the dinitrile compound, and the peeling strength F satisfy a relation $0.14 \leq (100b+F)/100a \leq 1.35$.

The linear carboxylate compound includes ester groups

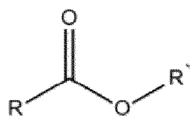.

The ester groups do not form a ring, and the linear carboxylate compound is not lactone, lactide, or the like. It should be noted that in this application: it does not mean that a lactone compound, a lactide compound, or the like cannot be added to the solvent. On condition that the linear carboxylate compound (no ring formed by ester groups) of this application is added, a lactone compound solvent, a lactide compound solvent, or the like can be further added.

The linear carboxylate compound (with no ring formed by ester groups) can reduce the viscosity of the electrolyte system and improve the kinetic performance of the electrochemical apparatus to a certain extent. However, the compound causes a binder on the negative electrode plate to swell to some extent, thereby affecting peeling strength of the negative electrode plate and reducing the strength of bonding between the negative electrode active material layer and the negative electrode current collector. This hinders efficient transport of electrons, thereby affecting the fast charging performance. Therefore, when the peeling strength of the negative electrode plate and the linear carboxylate compound are limited to being within the foregoing range, close contact can be achieved between the negative electrode active material layer and the negative electrode current collector, so as to satisfy the fast charging performance to some extent. In addition, the high-temperature performance of the linear carboxylate compound is relatively unsatisfying. The dinitrile compound can effectively improve the high-temperature performance and enhance the adhesion of the negative electrode plate as well, thereby further improving the fast charging performance of the electrochemical apparatus. Therefore, in this application, the mass percentage a (a is 20%-70%) of the linear carboxylate compound, the mass percentage b (b is 0.01%-7%) of the dinitrile compound, and the peeling strength F (F is 5 N/m-20 N/m) satisfy the relation $0.14 \leq (100b+F)/100a \leq 1.35$. In this case, the electrochemical apparatus features a high charging speed, and has good high-temperature cycling performance, hotbox performance, and high-temperature full charge storage stability.

For example, based on the total mass of the electrolyte, the mass percentage a of the linear carboxylate compound (no ring formed by ester groups) is 20%, 21%, 25%, 30%, 35%, 36%, 40%, 43%, 45%, 49%, or 50%. Optionally, the mass percentage a of the linear carboxylate compound (no ring formed by ester groups) is 21%-49%. This can further increase the charging speed of the electrochemical apparatus and ensure moderate high-temperature performance of the electrochemical apparatus. Optionally, the mass percentage a of the linear carboxylate compound (no ring formed by ester groups) is 36%-43%. This can further increase the charging speed of the electrochemical apparatus and ensure moderate high-temperature performance of the electrochemical apparatus.

In some embodiments, the linear carboxylate compound (no ring formed by ester groups) includes at least one of ethyl acetate, methyl propionate, isopropyl formate, ethyl propionate, propyl acetate, isopropyl acetate, methyl butyrate,

methyl isobutyrate, propyl propionate, isopropyl propionate, ethyl butyrate, ethyl isobutyrate, butyl acetate, isobutyl acetate, and a fluorine-substituted products thereof.

For example, the linear carboxylate compound (no ring formed by ester groups) includes at least one of ethyl acetate, a fluorine-substituted product of ethyl acetate, methyl propionate, a fluorine-substituted product of methyl propionate, isopropyl formate, a fluorine-substituted product of isopropyl formate, ethyl propionate, a fluorine-substituted product of ethyl propionate, propyl acetate, a fluorine-substituted product of propyl acetate, isopropyl acetate, a fluorine-substituted product of isopropyl acetate, methyl butyrate, a fluorine-substituted product of methyl butyrate, methyl isobutyrate, a fluorine-substituted product of methyl isobutyrate, propyl propionate, a fluorine-substituted product of propyl propionate, isopropyl propionate, a fluorine-substituted product of isopropyl propionate, ethyl butyrate, a fluorine-substituted product of ethyl butyrate, ethyl isobutyrate, a fluorine-substituted product of ethyl isobutyrate, butyl acetate, a fluorine-substituted product of butyl acetate, isobutyl acetate, and a fluorine-substituted product of isobutyl acetate. A fluorine substitute refers to a linear carboxylate compound in which at least one hydrogen atom is substituted with a fluorine atom.

For example, a fluorine-substituted product of the linear carboxylate compound may be at least one of methyl trifluoroacetate, ethyl trifluoroacetate, propyl trifluoroacetate, butyl trifluoroacetate, and 2,2,2-trifluoroethyl trifluoroacetate.

Optionally, the linear carboxylate compound (no ring formed by ester groups) includes at least one of ethyl acetate, methyl propionate, ethyl propionate, propyl acetate, methyl butyrate, propyl propionate, ethyl butyrate, and butyl acetate. The foregoing linear carboxylate compounds can effectively increase the charging speed.

In other embodiments, the electrolyte of this application may further contain another non-aqueous solvent, and the another non-aqueous solvent includes at least one of cyclic carboxylate, cyclic carbonate, linear carbonates, cyclic ether, linear ether, and an aromatic fluorine-containing solvent.

The cyclic carboxylate includes either or both of γ-butyrolactone and γ-valerolactone. Some hydrogen atoms in the cyclic carboxylate may be substituted with fluorine atoms.

The cyclic carboxylate may include, but is not limited to, at least one of ethylene carbonate (EC), propylene carbonate (PC), and butylene carbonate.

The linear carbonate may include, but is not limited to, at least one of dimethyl carbonate, ethyl methyl carbonate, diethyl carbonate (DEC), methyl n-propyl carbonate, ethyl n-propyl carbonate, or dipropyl carbonate.

The cyclic ether may include, but is not limited to, at least one of tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, or dimethoxypropane.

The linear ether may include, but is not limited to at least one of dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, or 1,2-ethoxymethoxyethane.

The aromatic fluorine-containing solvent may include but is not limited to at least one of fluorobenzene, difluorobenzene, trifluorobenzene, tetrafluorobenzene, pentafluorobenzene, hexafluorobenzene, and trifluoromethylbenzene.

For example, based on the total mass of the electrolyte, the mass percentage b of the dinitrile compound is 0.01%, 0.05%, 0.1%, 0.5%, 1%, 1.1%, 2%, 2.1%, 3%, 4%, 4.1%, 4.9%, 5%, 6%, or 7%. Optionally, the mass percentage b of the dinitrile compound is 1.1%-4.9%. This can further improve the high-temperature cycling performance and high-temperature full charge storage stability of the electrochemical apparatus. Optionally, the mass percentage b of the dinitrile compound is 2.1%-4.1%. This can further improve the high-temperature cycling performance and high-temperature full charge storage stability of the electrochemical apparatus.

In some embodiments, the dinitrile compound includes at least one of succinonitrile, glutaronitrile, adiponitrile, heptanedinitrile, octanedinitrile, 2-methylglutaronitrile, dipropylmalononitrile, and 1,2-bis(cyanoethoxy)ethane.

Further, the dinitrile compound includes at least one of succinonitrile, glutaronitrile, adiponitrile, heptanedinitrile, octanedinitrile, 2-methylglutaronitrile, and dipropylmalononitrile. The foregoing dinitrile compound can effectively improve the high-temperature cycling performance and high-temperature full charge storage stability of the electrochemical apparatus.

For example, the peeling strength F measured in N/m between the negative electrode active material layer and the negative electrode current collector is 5 N/m, 7.1 N/m, 8 N/m, 8.2 N/m, 10 N/m, 12 N/m, 13.7 N/m, 15 N/m, 15.5 N/m, 18 N/m, or 20 N/m. Optionally, the peeling strength F N/m between the negative electrode active material layer and the negative electrode current collector is 7.1 N/m-15.5 N/m. This can further increase the charging speed of the electrochemical apparatus and improve the high-temperature cycling performance of the electrochemical apparatus. Optionally, In some embodiments of this application, the peeling strength F measured in N/m between the negative electrode active material layer and the negative electrode current collector is 8.2 N/m-13.7 N/m. This can further increase the charging speed of the electrochemical apparatus and improve the high-temperature cycling performance of the electrochemical apparatus.

For example, the mass percentage a of the linear carboxylate compound (no ring formed by ester groups), the

mass percentage b of the dinitrile compound, and the peeling strength F measured in N/m satisfy a relation (100b+F)/100a. A value of (100b+F)/100a may be 0.14, 0.2, 0.21, 0.23, 0.25, 0.3, 0.33, 0.39, 0.4, 0.5, 0.6, 0.7, 0.8, 0.9, 1.0, 1.1, 1.2, 1.3, or 1.35. Optionally, the mass percentage a of the linear carboxylate compound (no ring formed by ester groups), the mass percentage b of the dinitrile compound, and the peeling strength F measured in N/m satisfy a relation $0.21 \leq (100b+F)/100a \leq 0.39$. This can further improve the high-temperature performance of the electrochemical apparatus. Optionally, the mass percentage a of the linear carboxylate compound (no ring formed by ester groups), the mass percentage b of the dinitrile compound, and the peeling strength F satisfy a relation $0.23 \leq (100b+F)/100a \leq 0.33$. This can further improve the high-temperature performance of the electrochemical apparatus.

In some embodiments, the electrolyte contains succinonitrile and adiponitrile. This can further increase the capacity retention rate of the electrochemical apparatus and balance the charging speed and the hotbox temperature.

In some embodiments, the electrolyte contains adiponitrile and 1,2-bis(cyanoethoxy)ethane. This can further increase the capacity retention rate of the electrochemical apparatus and balance the charging speed and the hotbox temperature.

In some embodiments, the electrolyte contains ethyl acetate and adiponitrile. This can further increase the capacity retention rate of the electrochemical apparatus and balance the charging speed and the hotbox temperature.

In some embodiments, the electrolyte further contains a compound of formula I. Based on the total mass of the electrolyte, a mass percentage c of the compound of formula I is 0.04%-0.8% and satisfies a relation $0.01 \leq 10c/a \leq 0.2$ with a. A structural formula of the compound of formula I is:

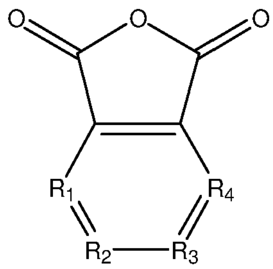
formula I;

where, $R_1$, $R_2$, $R_3$, and $R_4$ each are independently selected from N or C-$R_5$ and remaining groups are C-R5; $R_5$ is independently selected from hydrogen, substituted or unsubstituted C 1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen.

When the compound represented by the foregoing general formula is added, the capacity retention rate of the electrochemical apparatus can be further increased, and the charging speed and the hotbox temperature can be balanced by controlling the proportion of the compound.

For example, $R_1$ in the structural formula of the compound of formula I is N and the remaining groups ($R_2$, $R_3$, and $R_4$) are all C-$R_5$; an $R_5$ group in $R_2$, $R_3$, and $R_4$ is independently selected from hydrogen, substituted or unsubstituted C1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen. In other embodiments, the $R_5$ group may further contain a heteroatom, where the heteroatom includes at least one of O, S, N, B, P, or Si.

For another example, $R_2$ in the structural formula of the compound of formula I is N and the remaining groups ($R_1$, $R_3$, and $R_4$) are all C-$R_5$; an $R_5$ group in $R_1$ $R_3$, and $R_4$ is independently selected from hydrogen, substituted or unsubstituted C1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen. In other embodiments, the $R_5$ group may further contain a heteroatom, where the heteroatom includes at least one of O, S, N, B, P, or Si.

For another example, $R_1$ and $R_2$ in the structural formula of the compound of formula I are N and the remaining groups ($R_3$ and $R_4$) are all C-$R_5$; an $R_5$ group in $R_3$ and $R_4$ is independently selected from hydrogen, substituted or unsubstituted C1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen. In other embodiments, the $R_5$ group may

further contain a heteroatom, where the heteroatom includes at least one of O, S, N, B, P, or Si.

In the foregoing compound of formula I, the anhydride portion can neutralize alkalies on a surface of the positive electrode plate, inhibiting the decomposition of carboxylic esters by alkaline metal oxides. In addition, the unsaturated ring portion of the compound of formula I can form a film on the positive and negative electrode plates to form stable CEI and SEI, improving the high-temperature performance of the electrochemical apparatus. Based on the total mass of the electrolyte, the mass percentage c of the compound of formula I is 0.04%-0.8%. When the mass percentage is within this range, the high-temperature cycling performance and high-temperature full charge storage stability of the electrochemical apparatus can be significantly improved, with mild impact on the impedance of the electrochemical apparatus. The mass percentage c of the compound of formula I and the mass percentage a of the linear carboxylate compound satisfy a relation $0.01 \leq 10c/a \leq 0.2$. With this relation satisfied, the compound of formula I can effectively alleviate the high temperature problem caused by the linear carboxylate compound, while the linear carboxylate compound can effectively alleviate the high impedance problem of the compound of formula I, further improving the overall performance of the electrochemical apparatus.

For example, based on the total mass of the electrolyte, the mass percentage c of the compound of formula I is 0.04%, 0.1%, 0.2%, 0.3%, 0.4%, 0.5%, 0.6%, 0.7%, or 0.8%, and a value of the relation 10c/a is 0.01, 0.02, 0.03, 0.05, 0.08, 0.1, 0.12, 0.15, 0.18, or 0.2. Optionally, based on the total mass of the electrolyte, the mass percentage c of the compound of formula I is 0.3%-0.5% and satisfies a relation $0.08 \leq 10c/a \leq 0.13$ with a.

In some embodiments, the compound of formula I includes at least one of substances represented by the following chemical formulae:

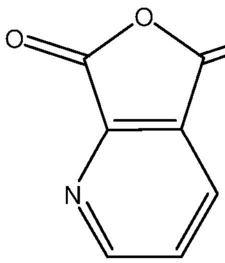
formula I-1,
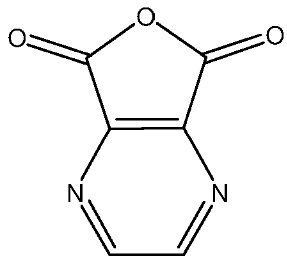
formula I-2,

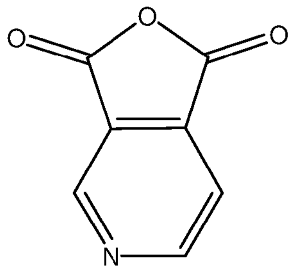
formula I-3,

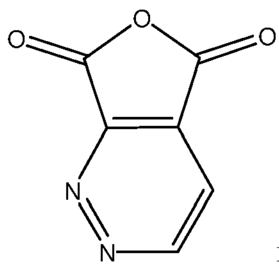
formula I-4, and
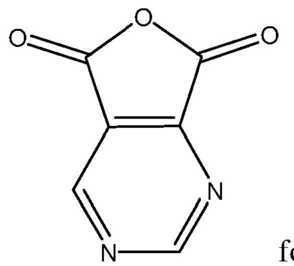
formula I-5.

The foregoing compounds can greatly improve the high-temperature cycling performance and hotbox performance of the electrochemical apparatus.

In some embodiments, the electrolyte further contains a trinitrile compound. Based on the total mass of the electrolyte, a mass percentage d of the trinitrile compound is 0.01%-5%, and d and b satisfy a relation $0.0014 \leq d/b \leq 3$. Adding the trinitrile compound can further improve the high-temperature performance and hotbox performance while maintaining other performance of the electrochemical apparatus to some extent.

For example, the mass percentage d of the trinitrile compound is 0.01%, 0.02%, 0.05%, 0.1%, 0.15%, 0.2%,

0.25%, 0.3%, 0.4%, 0.5%, 1%, 1.5%, 2%, 2.5%, 3%, 4%, or 5%, and a value of the relation d/b is 0.0014, 0.01, 0.1, 0.2, 0.5, 1, 1.5, 2, 2.5, or 3. Optionally, based on the total mass of the electrolyte, the mass percentage d of the trinitrile compound is 1%-2.5%, and d and b satisfy a relation $0.5 \leq d/b \leq 1.25$.

In some embodiments, the trinitrile compound includes at least one of 1,3,5-pentanetricarbonitrile, 1,3,6-hexanetricarbonitrile, 1,2,6-hexanetricarbonitrile, or 1,2,3-tris(2-cyanooxy)propane. The foregoing compound can further improve the high-temperature cycling performance and high-temperature full charge storage stability of the electrochemical apparatus.

In some embodiments, the electrolyte further contains lithium difluorophosphate, and based on the mass of the electrolyte, a mass percentage e of the lithium difluorophosphate is 0.01%-1%. Lithium difluorophosphate can participate in the formation of SEI film at the negative electrode plate and the formation of CEI film at the positive electrode plate, so as to form a stable solid electrolyte interface rich in F, inhibiting the oxidation reaction between the linear carboxylate compound and the dinitrile compound at the positive electrode plate and co-embedding at the negative electrode plate. In addition, lithium difluorophosphate can inhibit the decomposition of lithium hexafluorophosphate by affecting the hydrolysis reaction balance of lithium hexafluorophosphate. This reduces the acidity of the electrolyte and reduces the corrosion of the negative electrode current collector, thereby ensuring the peeling strength of the negative electrode plate and further improving the charging speed of the electrochemical apparatus. For example, based on the mass of the electrolyte, a mass percentage e of the lithium difluorophosphate is 0.01%, 0.1%, 0.2%, 0.3%, 0.4%, 0.5%, 0.6%, 0.7%, 0.8%, 0.9%, or 1%. Optionally, based on the mass of the electrolyte, the mass percentage e of the lithium difluorophosphate is 0.3%-0.6%.

Based on the total mass of the electrolyte, a mass percentage of lithium salts is 10%-20%. In addition to lithium difluorophosphate, the lithium salts may include but are not limited to at least one of the following: inorganic lithium salts such as $LiPF_6$, $LiBF_4$, $LiClO_4$, $LiAlF_4$, $LiSbF_6$, and $LiWF_7$; lithium tungstates such as LiWOFs; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In this application, a negative electrode plate includes a negative electrode current collector and a negative electrode active material layer disposed on at least one surface of the negative electrode current collector. The "negative electrode active material layer disposed on at least one surface of the negative electrode current collector" means that the negative electrode active material layer may be disposed on one or two surfaces of the negative electrode current collector in its thickness direction. It should be noted that the "surface" herein may be an entire or partial area of the negative electrode current collector. This is not particularly limited in this application provided that the objectives of this application can be achieved.

The negative electrode active material layer includes a negative electrode material, a binder, and a conductive agent. The negative electrode active material layer may be of one or multiple layers, and each of the multiple layers of the negative electrode active material layer may contain the same or different negative electrode materials. The negative electrode material is any substance that can reversibly intercalates and deintercalates lithium ions and other active ions. The negative electrode material may include but is not limited to at least one of natural graphite, artificial graphite, a mesocarbon microbead (MCMB), hard carbon, soft carbon, silicon, a silicon-carbon composite, SiOx ($0.5<x<1.6$), a Li-Sn alloy, a Li-Sn-O alloy, Sn, SnO, SnO2, spinel-structure lithium titanate $Li_4Ti_5O_{12}$, a Li-Al alloy, lithium metal, and the like. The binder includes but is not limited to at least one of styrene butadiene rubber, fluorinated rubber, polyacrylonitrile, polyacrylic acid, polyacrylate, polyvinyl alcohol, polytetrafluoroethylene, or polyolefin, which allows the negative electrode plate to have good adhesion and adequate peeling strength. The conductive agent includes but is not limited to a carbon-based material, a metal-based material, and a conductive polymer. For example, the carbon-based material may include natural graphite, artificial graphite, carbon black, acetylene black, Ketjen black, carbon fiber, or any combination thereof; the metal-based material may include metal powder, metal fabric, copper, nickel, aluminum, or silver; and the conductive polymer may include a polyphenylene derivative. The mass ratio of the negative electrode material, the conductive agent, and the binder in the negative electrode active material layer is not particularly limited in this application and can be selected by a person skilled in the art as needed, provided that the objectives of this application can be achieved.

In some embodiments, the negative electrode material includes graphite, where a specific surface area f of the graphite is 1 $m^2/g$-6 $m^2/g$. In this case, the electrolyte retention of the negative electrode plate is appropriate so that

swelling of the binder on the negative electrode plate by the electrolyte can be controlled, thereby further improving the high-temperature cycling performance and high-temperature full charge storage stability of the electrochemical apparatus.

For example, the specific surface area f of the graphite is 1 $m^2/g$, 1.5 $m^2/g$, 2 $m^2/g$, 2.5 $m^2/g$, 3 $m^2/g$, 3.5 $m^2/g$, 4 $m^2/g$, 4.5 $m^2/g$, 5 $m^2/g$, 5.5 $m^2/g$, or 6 $m^2/g$.

In some embodiments, the negative electrode active material layer may further include a thickener. A type of the thickener is not particularly limited provided that the objectives of this application can be achieved. For example, the thickener may include but is not limited to sodium carboxymethyl cellulose.

The negative electrode current collector is not particularly limited in this application provided that the objectives of this application can be achieved. For example, the negative electrode current collector may include copper foil, copper alloy foil, nickel foil, stainless steel foil, titanium foil, foamed nickel, foamed copper, a composite current collector, or the like. In this application, neither a thickness of the negative electrode current collector nor a thickness of the negative electrode active material layer is particularly limited, provided that the objectives of this application can be achieved. For example, the thickness of the negative electrode current collector is 6 μm-10 μm, and the thickness of the negative electrode active material layer is 30 μm-120 μm. In this application, a thickness of the negative electrode plate is not particularly limited, provided that the objectives of this application can be achieved. For example, the thickness of the negative electrode plate is 50 μm-150 μm. The negative electrode plate may further include a conductive layer, and the conductive layer is located between the negative electrode current collector and the negative electrode active material layer. Composition of the conductive layer is not particularly limited, and the conductive layer may be a conductive layer commonly used in the art. The conductive layer includes a conductive agent and a binder.

In some embodiments, the negative electrode current collector may be copper foil, copper alloy foil, or foamed copper. A complexation can take place between a dinitrile compound and copper ions in the negative electrode current collector, forming a protective film on the surface of the copper-containing negative electrode current collector. In this case, more bonding sites can be provided on the surface of the copper-containing negative electrode current collector. Through cooperation with the binder, the bonding performance between the negative electrode current collector and the negative electrode active material layer is improved, thereby improving the fast charging performance of the electrochemical apparatus. Furthermore, if the electrolyte contains a trinitrile compound, a product of the trinitrile compound complexing with copper ions will dissolve in the electrolyte and cause a risk of corroding the copper-containing negative electrode current collector. However, a dinitrile compound is added in this application and can prevent the copper-containing negative electrode current collector against the corrosion. As a result, cooperation between the dinitrile compound and the trinitrile compound can further improve the high-temperature cycling performance and high-temperature full charge storage stability of the electrochemical apparatus and increase the hotbox temperature.

In this application, a positive electrode plate includes a positive electrode current collector and a positive electrode active material layer disposed on at least one surface of the positive electrode current collector. The "positive electrode active material layer disposed on at least one surface of the positive electrode current collector" means that the positive electrode active material layer may be disposed on one or two surfaces of the positive electrode current collector in its thickness direction. It should be noted that the "surface" herein may be an entire or partial area of the positive electrode current collector. This is not particularly limited in this application provided that the objectives of this application can be achieved.

The positive electrode active material layer includes a positive electrode material, and the positive electrode material includes a substance that can reversibly intercalates and deintercalates lithium ions and other active ions. The positive electrode active material layer may be of one or multiple layers, and each of the multiple layers of the positive electrode active material may contain the same or different positive electrode materials. The positive electrode material is not particularly limited in this application, provided that the objectives of this application can be achieved. For example, the positive electrode material may include but is not limited to at least one of lithium nickel cobalt manganate (such as common NCM811, NCM622, NCM523, or NCM111), lithium nickel cobalt aluminate, lithium iron phosphate, lithium-rich manganese-based material, lithium cobalt oxide ($LiCoO_2$), lithium manganese oxide, lithium iron manganese phosphate, or lithium titanate.

In some embodiments, a substance different from a composition of the positive electrode material may be attached to the surface of the positive electrode material. For example, the surface-attached substance may include but is not limited to at least one of aluminum oxide, silicon dioxide, titanium dioxide, zirconium oxide, magnesium oxide, calcium oxide, boron oxide, antimony oxide, bismuth oxide, lithium sulfate, sodium sulfate, potassium sulfate, magnesium sulfate, calcium sulfate, aluminum sulfate, lithium carbonate, calcium carbonate, and magnesium carbonate, or carbon. Attaching the substance to the surface of the positive electrode material can suppress oxidation reaction of the electrolyte on the surface of the positive electrode material and prolong the service life of the electrochemical apparatus. A shape of particles in the positive electrode material is not particularly limited, provided that the objectives of this application can be achieved. For example, the shape of particles in the positive electrode material may include but is not limited to at least one of block, polyhedron, spherality, ellipsoid, plate, needle, or cylinder. Particles in the positive electrode material are not particularly

limited, provided that the objectives of this application can be achieved. For example, the particles in the positive electrode material may include but are not limited to primary particles, secondary particles, or a combination thereof.

The positive electrode active material layer further includes a conductive agent and a binder. The conductive agent and the binder in this application are not particularly limited, provided that the objectives of this application can be achieved. For example, the binder may include but is not limited to at least one of polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon; and the conductive agent may include but is not limited to at least one of a carbon-based material, a metal-based material, and a conductive polymer. For example, the carbon-based material may include natural graphite, artificial graphite, carbon black, acetylene black, Ketjen black, carbon fiber, or any combination thereof; the metal-based material may include metal powder, metal fabric, copper, nickel, aluminum, or silver; and the conductive polymer may include a polyphenylene derivative. Mass percentages of the positive electrode material, the conductive agent, and the binder in the positive electrode active material layer are not particularly limited in this application and can be selected by a person skilled in the art provided that the objectives of this application can be achieved.

The positive electrode current collector is not particularly limited in this application, provided that the objectives of this application can be achieved. For example, the positive electrode current collector may include but is not limited to aluminum foil, aluminum alloy foil, or a composite current collector (for example, an aluminum-carbon composite current collector). Thicknesses of the positive electrode current collector and the positive electrode active material layer are not particularly limited in this application, provided that the objectives of this application can be achieved. For example, the thickness of the positive electrode current collector is 6 μm-12 μm, and the thickness of the positive electrode active material layer is 30 μm-120 μm. In this application, a thickness of the positive electrode plate is not particularly limited, provided that the objectives of this application can be achieved. For example, the thickness of the positive electrode plate is 50 μm-150 μm.

In this application, the electrochemical apparatus further includes a separator used to separate the positive electrode plate from the negative electrode plate, so as to prevent a short circuit inside the electrochemical apparatus. The separator allows electrolyte ions to pass freely, and does not affect electrochemical charging and discharging. The separator is not particularly limited in this application, provided that the objectives of this application can be achieved. For example, a material of the separator may include but is not limited to at least one of polyethylene (PE)- and polypropylene (PP)-based polyolefin (PO), polyester (for example, a polyethylene terephthalate (PET) film), cellulose, polyimide (PI), polyamide (PA), spandex, or aramid; and a type of the separator may include a woven film, a non-woven film, a microporous film, a composite film, a laminated film, or a spinning film.

For example, the separator may include a substrate layer and a surface treatment layer. The substrate layer may be a non-woven fabric, film, or composite film of a porous structure. A material of the substrate layer may include at least one of polyethylene, polypropylene, polyethylene terephthalate, and polyimide. Optionally, a polypropylene porous membrane, a polyethylene porous membrane, polypropylene nonwoven fabric, polyethylene nonwoven fabric, or polypropylene-polyethylene-polypropylene porous composite membrane can be used. Optionally, a surface treatment layer is provided on at least one surface of the substrate layer, and the surface treatment layer may be a polymer layer or an inorganic substance layer, or a layer formed by a polymer and an inorganic substance. For example, the inorganic layer includes inorganic particles and a binder. The inorganic particles are not particularly limited, and may include, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be, for example, at least one of the foregoing binders. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The electrochemical apparatus of this application further includes a packaging bag, which is used to accommodate the positive electrode plate, the separator, the negative electrode plate, the electrolyte, and another component known in the electrochemical apparatus field. The another component is not limited in this application. The packaging bag is not particularly limited in this application and may be a packaging bag known in the art, provided that the objectives of this application can be achieved.

The electrochemical apparatus in this application is not particularly limited, and may include any apparatus in which an electrochemical reaction occurs. In some embodiments, the electrochemical apparatus may include but is not limited to a lithium metal secondary battery, a lithium-ion secondary battery (lithium-ion battery), a lithium polymer secondary battery, a lithium-ion polymer secondary battery, or the like. The electrochemical apparatus may also be a sodium-ion battery (with lithium salt in the electrolyte replaced with sodium salt), a potassium-ion battery (with lithium salt in the electrolyte replaced with potassium salt), or the like.

A preparation process of the electrochemical apparatus is well known to a person skilled in the art, and is not

particularly limited in this application. For example, the process may include but is not limited to the following steps. A positive electrode plate, a separator, and a negative electrode plate are stacked in sequence, operations such as winding and folding are performed on the resulting stack to obtain an electrode assembly of a winding structure, the electrode assembly is put into a packaging bag, and electrolyte is injected into the packaging bag which is then sealed, to produce an electrochemical apparatus. Alternatively, a positive electrode plate, a separator, and a negative electrode plate are stacked in sequence, four corners of the entire stack structure are fixed with a tape to produce an electrode assembly of an stacked structure, and electrolyte is injected into the packaging bag which is then sealed, to produce an electrochemical apparatus. In addition, an overcurrent prevention element, a guide plate, and the like may also be placed in the packaging bag when required, so as to prevent pressure rise, overcharge, and over-discharge of the electrochemical apparatus.

This application further provides an electric device including the electrochemical apparatus according to any one of the foregoing embodiments. As a result, the electric device provided in this application has good performance in use.

The electric device of this application is not particularly limited, and may be any electric device known in the prior art. In some embodiments, the electric device may include but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

## Examples

The following describes the embodiments of this application more detailedly by using examples and comparative examples. Various tests and evaluations were performed in the following methods. In addition, unless otherwise specified, "parts" and "%" are based on weight.

### Test method and devices

### Test on peeling strength of negative electrode plate:

A double-sided adhesive tape (20 mm wide, 60 to 70 mm long) was obtained by cutting and adhered to a steel plate. A negative electrode plate was obtained by cutting, and a surface, away from a current collector in a thickness direction, of the negative electrode plate was adhered to an adhesive surface of a double-sided tape (with the negative electrode plate being greater than the double-sided tape in length and fully covering the latter in width). Rolling was performed with a 2 kg press roller to ensures that the adhesive tape adheres to the surface under test. The current collector was stretched by a tensile machine for testing the peeling strength, and a test result of the tensile force for peeling off the current collector was recorded as a bonding force F between a bonding layer and the negative electrode current collector.

### High-temperature cycling performance test

A lithium-ion battery was placed in a 45°C thermostat, charged to 4.48 V at a constant current of 4.5C, charged to 0.05C at a constant voltage of 4.48 V, and then discharged to 3.0 V at a constant current of 1.0C. This was one charge-discharge cycle. The first discharge capacity was recorded as $C_1$. 800 cycles of charging and discharging were performed using the foregoing method. The discharge capacity after the 800 cycles was recorded as $C_{800}$.

Cycling capacity retention rate of the lithium-ion battery = $(C_{800}/C_1)\times100\%$.

### Charging speed test:

After a lithium-ion battery was left standing for 30 minutes at 25°C, the start time was recorded as ti. The lithium-ion battery was charged to 4.2 V at 4.5C, charged to 4.35 V at 3.5C, charged to 4.4 V at 2.5C, charged to 4.48 V at 2C, and then charged to 0.05C at a constant voltage. The end time was recorded as $t_2$.

The charging speed is $t=t_2-t_1$.

### High-temperature storage performance test:

At room temperature (25°C), a lithium-ion battery was charged to 4.48 V at a constant current of 1.5C and charged to 0.05C at a constant voltage of 4.48 V. The initial thickness was recorded as Li. The lithium-ion battery was then put into an oven at 85°C and left standing for four hours. Then, a thickness $L_2$ of the lithium-ion battery was measured.

Volume swelling rate during high-temperature storage = $(L_2/L_1-1)\times 100\%$.

**Hotbox test:**

At room temperature, the battery was charged to 4.48 V at a constant current of 1.5C and charged to 0.05C at a constant voltage of 4.48 V. Then, the temperature of a high-temperature furnace with the battery inside was raised to T°C ±2°C at a speed of 5°C/min±2°C/min and left unchanged for 60 minutes (T was a specified test temperature). Five cells were tested each time. The hotbox test was passed if no cell caught fire.

**Specific surface area test:**

A lithium-ion battery was disassembled after being discharged. A negative electrode active material layer of the disassembled negative electrode plate was scraped off and immersed in a solvent NMP (N-methylpyrrolidone), and a binder in the negative electrode active material layer was washed out to obtain a powder material. The specific surface area of the material was tested based on the amount of nitrogen absorbed by the powder material. Instrument model: TriStar II 3020.

**Example 1-1**

<Preparation of a positive electrode material>

A lithium source material $Li_2CO_3$ and a transition metal source material $Co(NO_3)_2$ were used as raw materials and mixed at a mass ratio of 11:26. The raw materials were dispersed in absolute ethanol, a solid content of the dispersant was adjusted to 35%, and the dispersant was ground evenly. The ground solution was dried at 60°C to obtain powder. First heat treatment was performed on the powder at 600°C in an air atmosphere for three hours, and a transition metal oxide was obtained after the first heat treatment. The transition metal oxide and a doping element source material $Mg(NO_3)_2$ were evenly mixed at a mass ratio of 1639:1, and second heat treatment was performed on the mixture at a temperature of 1000°C in a nitrogen atmosphere. A positive electrode material doped with the Mg metal element was obtained.

<Preparation of a positive electrode plate>

The prepared positive electrode material, acetylene black, and polyvinylidene fluoride were mixed at a mass ratio of 96:2:2, with N-methylpyrrolidone (NMP) added as a solvent, to prepare a slurry with a solid content of 75%. The slurry was stirred evenly in the vacuum to obtain a positive electrode slurry. The positive electrode slurry was uniformly applied on a surface of an aluminum foil positive electrode current collector with a thickness of 10 μm and dried at 90°C to obtain a positive electrode plate coated with a 100 μm-thick positive electrode active material layer on one surface. The foregoing steps were repeated on another surface of the aluminum foil to obtain a positive electrode plate coated with the positive electrode active material layer on both surfaces. Then, the positive electrode plate was dried at 90°C, cold pressed, cut, and welded with a tab to obtain a 74 mm×867 mm positive electrode plate.

<Preparation of a negative electrode plate>

Artificial graphite, styrene-butadiene rubber (SBR), and sodium carboxymethyl cellulose (CMC) were mixed at a mass ratio of 97.2:1.4:1.4, with deionized water added as a solvent, to prepare a slurry with a solid content of 45%. The slurry was stirred evenly by a vacuum mixer to obtain a negative electrode slurry. The negative electrode slurry was evenly applied on a copper foil negative electrode current collector with a thickness of 10 μm and dried at 90°C to obtain a negative electrode plate coated with a 100 μm-thick negative electrode active material layer on one surface. The foregoing steps were repeated on another surface of the aluminum foil to obtain a negative electrode plate coated with the negative electrode active material layer on both surfaces. Then, the negative electrode plate was dried at 90°C, cold pressed, cut, and welded with a tab to obtain a 78 mm×875 mm negative electrode plate.

<Preparation of electrolyte>

In an dry argon atmosphere glove box with a water content less than 10 ppm, ethyl propionate (EP), ethylene carbonate (EC), and propylene carbonate (PC) were mixed evenly at a mass ratio of 1:1:1, and a fully dried lithium salt LiPF6 was dissolved in the foregoing non-aqueous solvent to obtain a base electrolyte. Adiponitrile was added to the obtained base electrolyte and stirred evenly to obtain an electrolyte. Based on total mass of the electrolyte, a mass percentage of ethyl propionate was 20%, a mass percentage of $LiPF_6$ was 12.5%, a mass percentage of adiponitrile was

2%, and a mass percentage of another non-aqueous solvent (prepared by mixing PC and EC at a mass ratio of 1:1) was 65.5%.

Preparation of a separator

A 7 μm-thick porous polypropylene film (provided by Celgard) was used.

<Preparation of a lithium-ion battery>

The positive electrode plate, the separator, and he negative electrode plate were stacked in sequence, so that the separator was located between the positive electrode plate and the negative electrode plate for isolation, and then wound to obtain an electrode assembly. The electrode assembly was placed into outer packaging foil and dehydrated at 80°C. The prepared electrolyte was injected. A lithium-ion battery was obtained after processes including vacuum packaging, standing, formation, and shaping.

Table 1 shows parameters of the electrochemical apparatuses in different examples and comparative examples.

**Table 1 Parameters of electrochemical apparatuses**

| | Linear carboxylate compound | a (%) | Dinitrile compound | b (%) | Binder | Mass percentage of binder (%) | Peeling strength F (N/m) | (100b+F ) /100a |
|---|---|---|---|---|---|---|---|---|
| Example 1-1 | Ethyl propionate | 21 | Adiponitrile | 2 | Styrene-butadiene rubber | 1.4% | 8.2 | 0.549 |
| Example 1-2 | Ethyl propionate | 25 | Adiponitrile | 2 | Styrene-butadiene rubber | 1.4% | 8.2 | 0.41 |
| Example 1-3 | Ethyl propionate | 30 | Adiponitrile | 2 | Styrene-butadiene rubber | 1.4% | 8.2 | 0.34 |
| Example 1-4 | Ethyl propionate | 36 | Adiponitrile | 2 | Styrene-butadiene rubber | 1.4% | 8.2 | 0.28 |
| Example 1-5 | Ethyl propionate | 40 | Adiponitrile | 2.1 | Styrene-butadiene rubber | 1.4% | 8.2 | 0.26 |
| Example 1-6 | Ethyl propionate | 43 | Adiponitrile | 2 | Styrene-butadiene rubber | 1.4% | 8.2 | 0.24 |
| Example 1-7 | Ethyl propionate | 49 | Adiponitrile | 2 | Styrene-butadiene rubber | 1.4% | 8.2 | 0.21 |
| Example 1-8 | Ethyl propionate | 60 | Adiponitrile | 3.5 | Styrene-butadiene rubber | 1.4% | 8.2 | 0.20 |
| Example 1-9 | Ethyl propionate | 70 | Adiponitrile | 4.8 | Styrene-butadiene rubber | 1.4% | 8.2 | 0.19 |
| Example 1-10 | Ethyl propionate | 40 | Adiponitrile | 0.01 | Styrene-butadiene rubber | 1.4% | 8.2 | 0.21 |
| Example 1-11 | Ethyl propionate | 40 | Adiponitrile | 0.5 | Styrene-butadiene rubber | 1.4% | 8.2 | 0.22 |
| Example 1-12 | Ethyl propionate | 40 | Adiponitrile | 1.1 | Styrene-butadiene rubber | 1.4% | 8.2 | 0.23 |
| Example 1-13 | Ethyl propionate | 40 | Adiponitrile | 3 | Styrene-butadiene rubber | 1.4% | 8.2 | 0.28 |
| Example 1-14 | Ethyl propionate | 40 | Adiponitrile | 4.1 | Styrene-butadiene rubber | 1.4% | 8.2 | 0.31 |
| Example 1-15 | Ethyl propionate | 40 | Adiponitrile | 4.9 | Styrene-butadiene rubber | 1.4% | 8.2 | 0.33 |
| Example 1-16 | Ethyl propionate | 40 | Adiponitrile | 6 | Styrene-butadiene rubber | 1.4% | 8.2 | 0.36 |
| Example 1-17 | Ethyl propionate | 40 | Adiponitrile | 7 | Styrene-butadiene rubber | 1.4% | 8.2 | 0.38 |
| Example 1-18 | Ethyl propionate | 40 | Adiponitrile | 2 | Styrene-butadiene rubber | 1.0% | 5 | 0.18 |
| Example 1-19 | Ethyl propionate | 40 | Adiponitrile | 2 | Styrene-butadiene rubber | 1.2% | 7.1 | 0.23 |
| Example 1-20 | Ethyl propionate | 40 | Adiponitrile | 2 | Styrene-butadiene rubber | 1.6% | 9.7 | 0.29 |
| Example 1-21 | Ethyl propionate | 40 | Adiponitrile | 2 | Styrene-butadiene rubber | 1.8% | 11.3 | 0.33 |
| Example 1-22 | Ethyl propionate | 40 | Adiponitrile | 2 | Styrene-butadiene rubber | 2.0% | 13.7 | 0.39 |
| Example 1-23 | Ethyl propionate | 40 | Adiponitrile | 2 | Styrene-butadiene rubber | 2.2% | 15.5 | 0.44 |
| Example 1-24 | Ethyl propionate | 40 | Adiponitrile | 2 | Styrene-butadiene rubber | 2.4% | 17.5 | 0.49 |
| Example 1-25 | Ethyl propionate | 40 | Adiponitrile | 2 | Styrene-butadiene rubber | 2.6% | 20 | 0.55 |
| Example 1-26 | Ethyl propionate | 20 | Adiponitrile | 7 | Styrene-butadiene rubber | 2.6% | 20 | 1.35 |

(continued)

| | Linear carboxylate compound | a (%) | Dinitrile compound | b (%) | Binder | Mass percentage of binder (%) | Peeling strength F (N/m) | (100b+F ) /100a |
|---|---|---|---|---|---|---|---|---|
| Example 1-27 | Ethyl propionate | 20 | Adiponitrile | 3 | Styrene-butadiene rubber | 2.6% | 20 | 1.15 |
| Example 1-28 | Ethyl propionate | 20 | Adiponitrile | 1 | Styrene-butadiene rubber | 2.4% | 17.5 | 0.93 |
| Example 1-29 | Ethyl propionate | 30 | Adiponitrile + Butanedinitrile | 2+2 | Styrene-butadiene rubber | 2.4% | 17.5 | 0.72 |
| Example 1-30 | Ethyl propionate | 50 | Adiponitrile | 2 | Styrene-butadiene rubber | 1.0% | 5 | 0.14 |
| Example 1-31 | Ethyl acetate | 40 | Adiponitrile + Butanedinitrile | 1+1 | Styrene-butadiene rubber | 1.8% | 11.3 | 0.33 |
| Example 1-32 | Propyl propionate | 40 | Adiponitrile + 1,2-bis(cyanoethoxy)-ethane | 1+1 | Styrene-butadiene rubber | 1.8% | 11.3 | 0.33 |
| Example 1-33 | Ethyl propionate | 40 | Butanedinitrile | 2 | Styrene-butadiene rubber | 1.8% | 11.3 | 0.33 |
| Example 1-34 | Ethyl propionate | 40 | 2-methyl glutaronitrile | 2 | Styrene-butadiene rubber | 1.8% | 11.3 | 0.33 |
| Example 1-35 | Ethyl propionate | 40 | Adiponitrile | 2 | Polytetrafluoroethylene | 1.8% | 9.5 | 0.29 |
| Example 1-36 | Ethyl trifluoropropionate | 40 | Adiponitrile | 2 | Styrene-butadiene rubber | 1.8% | 11.3 | 0.33 |
| Comparative Example 1-1 | Ethyl propionate | 5 | Adiponitrile | 2 | Styrene-butadiene rubber | 1.8% | 11.3 | 2.66 |
| Comparative Example 1-2 | Ethyl propionate | 80 | Adiponitrile | 2 | Styrene-butadiene rubber | 1.8% | 11.3 | 0.19 |
| Comparative Example 1-3 | Ethyl propionate | 40 | Adiponitrile | 10 | Styrene-butadiene rubber | 1.8% | 11.3 | 0.53 |
| Comparative Examples 1-4 | Ethyl propionate | 40 | Adiponitrile | 2 | Styrene-butadiene rubber | 0.5% | 2 | 0.10 |
| Comparative Example 1-5 | Ethyl propionate | 50 | Adiponitrile | 0.01 | Styrene-butadiene rubber | 1.0% | 5 | 0.10 |
| Comparative Example 1-6 | γ-butyrolactone | 40 | Adiponitrile | 2 | Styrene-butadiene rubber | 1.8% | 11.3 | 0.33 |

Table 2 shows the tested properties of the electrochemical apparatuses provided in the foregoing examples and comparative examples.

**Table 2 Properties of electrochemical apparatuses**

| | Charging speed(per min) | Cycling at 45°C | 4h storage at 85°C | Hotbox (°C) |
|---|---|---|---|---|
| | | Capacity retention rate | Volume swelling rate | |
| Example 1-1 | 18.9 | 77.3% | 10.2% | 134 |
| Example 1-2 | 18.4 | 76.8% | 11.2% | 133 |
| Example 1-3 | 17.9 | 76.1% | 12.3% | 132 |
| Example 1-4 | 17.3 | 75.5% | 13.1% | 131 |
| Example 1-5 | 16.8 | 74.9% | 13.9% | 130 |
| Example 1-6 | 16.5 | 74.1% | 14.9% | 129 |
| Example 1-7 | 16.3 | 73.1% | 15.8% | 128 |
| Example 1-8 | 15.9 | 72% | 16.9% | 127 |
| Example 1-9 | 15.5 | 70.5% | 18% | 126 |
| Example 1-10 | 15.5 | 70.2% | 18.0% | 126 |
| Example 1-11 | 16.0 | 73.5% | 15.7% | 128 |
| Example 1-12 | 16.3 | 74.3% | 14.9% | 130 |
| Example 1-13 | 17.5 | 75.5% | 13.1% | 130 |
| Example 1-14 | 17.8 | 76.0% | 12.2% | 131 |
| Example 1-15 | 18.1 | 76.6% | 11.5% | 132 |
| Example 1-16 | 18.5 | 76.9% | 11.0% | 132 |
| Example 1-17 | 19.0 | 77.3% | 10.3% | 133 |
| Example 1-18 | 17.5 | 74.5% | 13.5% | 130 |
| Example 1-19 | 17.0 | 74.7% | 13.7% | 130 |
| Example 1-20 | 16.8 | 74.9% | 14.0% | 130 |
| Example 1-21 | 16.5 | 75.1% | 14.3% | 130 |
| Example 1-22 | 16.5 | 75.0% | 14.5% | 130 |
| Example 1-23 | 16.8 | 74.8% | 14.6% | 130 |
| Example 1-24 | 16.9 | 74.5% | 14.8% | 130 |
| Example 1-25 | 16.9 | 74.4% | 15.0% | 130 |
| Example 1-26 | 20.8 | 78.1% | 8.8% | 135 |
| Example 1-27 | 19.3 | 78.0% | 9.5% | 134 |
| Example 1-28 | 18.2 | 76.7% | 11.2% | 134 |
| Example 1-29 | 18.5 | 76.5% | 12.5% | 132 |
| Example 1-30 | 16.3 | 73.1% | 16.0% | 127 |
| Example 1-31 | 13.8 | 70.1% | 23.3% | 126 |
| Example 1-32 | 18.1 | 79.2% | 10.3% | 134 |
| Example 1-33 | 16.9 | 77.0% | 18.3% | 131 |
| Example 1-34 | 16.4 | 75.5% | 14.9% | 130 |
| Example 1-35 | 16.2 | 74.2% | 14.1% | 130 |

(continued)

| | Charging speed(per min) | Cycling at 45°C | 4h storage at 85°C | Hotbox (°C) |
|---|---|---|---|---|
| | | Capacity retention rate | Volume swelling rate | |
| Example 1-36 | 17.4 | 76.2% | 13.3% | 131 |
| Comparative Example 1-1 | 23.2 | 76.9% | 9.2% | 135 |
| Comparative Example 1-2 | 15.7 | 70.1% | 19.0% | 122 |
| Comparative Example 1-3 | 21.8 | 71.1% | 8.1% | 134 |
| Comparative Examples 1-4 | 19.5 | 69.6% | 13.8% | 130 |
| Comparative Example 1-5 | 15.3 | 68.3% | 20.2% | 123 |
| Comparative Example 1-6 | 23.4 | 76.8% | 11.5% | 132 |

As can be seen from Table 1 and Table 2, in Comparative Example 1-1, the amount of ethyl propionate added is too small, so the value of (100b+F)/100a is too large, resulting in a low charging speed (23.2min) of the electrochemical apparatus; in Comparative Example 1-2, the amount of ethyl propionate added is too large, resulting in poor high-temperature performance of the electrochemical apparatus, especially an extremely low hotbox temperature (124°C); in Comparative Example 1-3, the adiponitrile content is too high, resulting in a low charging speed (21.8min) of the electrochemical apparatus; in Comparative Example 1-4, the peeling strength of the negative electrode plate is too small, so the value of (100b+F)/100a is too small, resulting in a low capacity retention rate of the electrochemical apparatus; and in Comparative Example 1-5, the value of (100b+F)/100a is too small, resulting in poor high-temperature performance, low capacity retention rate, poor high-temperature storage stability, and low hotbox temperature of the battery.

In Examples 1-1 to 1-36, the overall performance of the electrochemical apparatuses is good, and the charging speed, high-temperature cycling performance (high capacity retention rate for cycling at 45°C), high-temperature full charge storage stability (low volume swelling rate after four hours of storage at 85°C following a full charge), and hotbox performance (high hotbox temperature) of the electrochemical apparatuses are all considered to some extent.

As can be known from a comparison between Example 1-1 and Example 1-7, when the mass percentage a of the linear carboxylate compound (for example, ethyl propionate) is within the range of 21%-49% based on the total mass of the electrolyte, the charging speed of the electrochemical apparatus can be further increased and moderate high-temperature performance can be ensured for the electrochemical apparatus.

As can be known from a comparison between Example 1-12 and Example 1-15, when the mass percentage b of the dinitrile compound (for example, adiponitrile) is within the range of 1.1%-4.9% based on the total mass of the electrolyte, the high-temperature performance of the electrochemical apparatus can be further improved while the charging speed is kept unchanged, achieving good high-temperature cycling performance, high-temperature full charge storage stability, and hotbox performance.

As can be known from a comparison between Example 1-19 and Example 1-23, when the peeling strength of the negative electrode plate is within the range of 7.1 N/m-15.5 N/m, the fast charging performance of the electrochemical apparatus can be fulfilled to some extent, with good high-temperature cycling performance and high hotbox temperature.

As can be known from a comparison among Example 1-7, Example 1-18, and Example 1-30, when $0.21 \leq (100b+F)/100a \leq 0.39$ is satisfied, the high-temperature performance of the electrochemical apparatus can be significantly improved, with good high-temperature cycling performance, high-temperature full charge storage stability, and hotbox performance.

As can be known from a comparison among Example 1-21, Example 1-31, Example 1-32, and Example 1-34, when the linear carboxylate compound (no ring formed by ester groups) in this application is ethyl propionate, ethyl acetate, propyl propionate, or ethyl trifluoropropionate, a is within the range of 20%-70%, and $0.14 \leq (100b+F)/100a \leq 1.35$ is satisfied, the overall performance of the electrochemical apparatus can be improved to some extent.

As can be known from a comparison among Example 1-21, Example 1-33, and Example 1-34, when the dinitrile compound is succinonitrile, adiponitrile, or 2-methylglutaronitrile, b is within the range of 0.01%-7%, and $0.14 \leq (100b+F)/100a \leq 1.35$ is satisfied, the overall performance of the electrochemical apparatus can be improved to some extent.

**Example 2-1**

Example 2-1 is an improvement made based on Example 1-21, with a difference in that a compound of formula I is

further added in Example 2-1. See Table 3 for specific choices of the compound of formula I and their amounts added.

**Table 3 Specific choices of the compound of formula I, their amounts added, and properties of electrochemical apparatuses**

| | Linear carboxylate | a (%) | Compound of formula I | c (%) | 10c/a | Charging speed (per min) | Cycling at 45°C | Hotbox (°C) |
|---|---|---|---|---|---|---|---|---|
| | | | | | | | Capacity retention rate | |
| Example 1-21 | Ethyl propionate | 40 | / | / | / | 16.5 | 75.1% | 130 |
| Example 2-1 | Ethyl propionate | 40 | I-1 | 0.04 | 0.01 | 16.7 | 75.8% | 131 |
| Example 2-2 | Ethyl propionate | 40 | I-1 | 0.1 | 0.03 | 17.2 | 76.1% | 132 |
| Example 2-3 | Ethyl propionate | 40 | I-1 | 0.2 | 0.05 | 17.5 | 76.9% | 133 |
| Example 2-4 | Ethyl propionate | 40 | I-1 | 0.3 | 0.08 | 18.0 | 78.1% | 134 |
| Example 2-5 | Ethyl propionate | 40 | I-1 | 0.4 | 0.10 | 18.4 | 79.3% | 134 |
| Example 2-6 | Ethyl propionate | 40 | I-1 | 0.5 | 0.13 | 18.7 | 80.2% | 135 |
| Example 2-7 | Ethyl propionate | 40 | I-1 | 0.6 | 0.15 | 19.3 | 80.7% | 135 |
| Example 2-8 | Ethyl propionate | 40 | I-1 | 0.7 | 0.18 | 20.2 | 81.1% | 136 |
| Example 2-9 | Ethyl propionate | 40 | I-1 | 0.8 | 0.20 | 20.8 | 81.4% | 137 |
| Example 2-10 | Ethyl propionate | 40 | I-2 | 0.4 | 0.10 | 18.9 | 79.7% | 134 |
| Example 2-11 | Ethyl propionate | 40 | I-3 | 0.4 | 0.10 | 18.1 | 78.8% | 135 |
| Example 2-12 | Ethyl propionate | 40 | I-4 | 0.4 | 0.10 | 19.2 | 80.1% | 134 |
| Example 2-13 | Ethyl propionate | 40 | I-5 | 0.4 | 0.10 | 18.7 | 79.9% | 134 |
| Example 2-14 | Propyl propionate | 40 | I-1 | 0.4 | 0.10 | 20.0 | 82.4% | 137 |
| Example 2-15 | Ethyl acetate | 40 | I-1 | 0.4 | 0.10 | 15.7 | 74.9% | 130 |
| Note: "/" in Table 3 indicates that the corresponding substance or parameter is non-applicable. For the compounds of formula I listed in Table 3, I-1 to I-5 refer to the structural formulae I-1 to I-5 mentioned in the DESCRIPTION OF EMBODIMENTS of the specification. | | | | | | | | |

As can be seen from Table 3, if an additive (the compound of formula I) is added to the electrolyte, the mass percentage c of the compound of formula I is 0.04%-0.8% based on the total mass of the electrolyte, and satisfies a relation 0.01≤10c/a≤0.2 with a, the overall performance of the electrochemical apparatus will be high, especially the high-temperature performance (high-temperature cycling performance and hotbox temperature).

As can be known from a comparison between Example 2-1 and Example 2-9, when the mass percentage c of the compound of formula I (for example, the compound of formula I-1) is 0.3%-0.5% based on the total mass of the electrolyte and satisfies a relation 0.08≤10c/a≤0.13 with a, the high-temperature performance of the electrochemical apparatus is good.

As can be known from a comparison among Example 2-1, Example 2-10, and Example 2-13, when the compound of formula I is the compound of formula I-3, the charging speed of the electrochemical apparatus is increased; when the compound of formula I is the compound of formula I-4, the high-temperature performance of the electrochemical apparatus is good.

**Example 3-1**

Example 3-1 is an improvement made based on Example 1-21, Example 3-8 is an improvement made based on Example 1-12, and further the trinitrile compound is added in Example 3-1 and Example 3-8. See Table 4 for specific choices of the trinitrile compound and their amounts added.

**Table 4 Specific choices of the trinitrile compound, their amounts added, and properties of electrochemical apparatuses**

| | Dinitrile compound | b (%) | Trinitrile compound | d (%) | d/b | Charging speed (per min) | Cycling at 45°C | 4h storage at 85°C | Hotbox (°C) |
|---|---|---|---|---|---|---|---|---|---|
| | | | | | | | Capacity retention rate | Volume swelling rate | |
| Example 1-21 | Adiponitrile | 2 | / | / | / | 16.5 | 75.1% | 14.3% | 130 |
| Example 1-12 | Adiponitrile | 1 | / | / | / | 16.3 | 74.3% | 14.9% | 130 |
| Example 3-1 | Adiponitrile | 2 | 1,3,5-pentanetricarbonitrile | 0.01 | 0.01 | 16.6 | 75.3% | 14.1% | 130 |
| Example 3-2 | Adiponitrile | 2 | 1,3,5-pentanetricarbonitrile | 0.5 | 0.25 | 16.9 | 75.7% | 13.8% | 130 |
| Example 3-3 | Adiponitrile | 2 | 1,3,5-pentanetricarbonitrile | 1.0 | 0.50 | 17.3 | 76.4% | 13.2% | 131 |
| Example 3-4 | Adiponitrile | 2 | 1,3,5-pentanetricarbonitrile | 1.5 | 0.75 | 17.9 | 77.0% | 12.6% | 131 |
| Example 3-5 | Adiponitrile | 2 | 1,3,5-pentanetricarbonitrile | 2.0 | 1.00 | 18.3 | 77.6% | 12.0% | 132 |
| Example 3-6 | Adiponitrile | 2 | 1,3,5-pentanetricarbonitrile | 2.5 | 1.25 | 18.8 | 78.1% | 11.3% | 132 |
| Example 3-7 | Adiponitrile | 2 | 1,3,5-pentanetricarbonitrile | 3.0 | 1.50 | 19.5 | 78.8% | 10.5% | 132 |
| Example 3-8 | Adiponitrile | 1 | 1,3,5-pentanetricarbonitrile | 3.0 | 3.00 | 19.0 | 78.1% | 11.6% | 132 |
| Example 3-9 | Adiponitrile | 2 | 1,3,6-hexanetricarbonitrile | 2.0 | 1.00 | 18.1 | 77.9% | 12.3% | 132 |
| Example 3-10 | Adiponitrile | 2 | 1,2,6-hexanetricarbonitrile | 2.0 | 1.00 | 17.8 | 77.1% | 12.9% | 132 |
| Example 3-11 | Adiponitrile | 2 | 1,2,3-tris(2-cyanooxy) propane | 2.0 | 1.00 | 18.9 | 78.3% | 11.7% | 132 |
| Comparative Example 3-1 | Adiponitrile | 2 | 1,3,5-pentanetricarbonitrile | 5.0 | 2.50 | 20.4 | 73.1% | 10.2% | 132 |
| Note: "/" in Table 4 means that the corresponding substance or parameter is non-applicable. | | | | | | | | | |

As can be seen from Table 4, if the trinitrile compound is added to the electrolyte, a mass percentage d of the trinitrile compound is 0.01%-3% based on the total mass of the electrolyte, and d and a satisfy a relation 0.0014≤d/b≤3, the overall performance of the electrochemical apparatus will be high, especially the high-temperature performance (high-temperature cycling performance and hotbox temperature).

As can be known from a comparison between Example 3-1 and Example 3-8, when the mass percentage d of the trinitrile compound is 1%-2.5% based on the total mass of the electrolyte and d and b satisfy a relation 0.5≤d/b≤1.25, the high-temperature performance of the electrochemical apparatus is good, without greatly affecting the charging speed.

As can be known from a comparison among Example 3-1, Example 3-9, and Example 3-11, when the trinitrile compound is 1,2,6-hexanetricarbonitrile, the charging speed of the electrochemical apparatus is high; when the trinitrile compound is 1,2,3-tris(2-cyanooxy)propane, the high-temperature performance of the electrochemical apparatus is good.

### Example 4-1

Example 4-1 is an improvement made based on Example 1-21, and further lithium difluorophosphate is added in Example 4-1. See Table 5 for the amounts of lithium difluorophosphate added.

**Table 5 Amounts of lithium difluorophosphate added and properties of electrochemical apparatuses**

| | Lithium salt | e (%) | Charging speed (per min) | Cycling at 45°C | 4h storage at 85°C |
|---|---|---|---|---|---|
| | | | | Capacity retention rate | Volume swelling rate |
| Example 1-21 | / | / | 16.5 | 75.1% | 14.3% |
| Example 4-1 | Lithium difluorophosphate | 0.2 | 16.0 | 75.0% | 14.6% |
| Example 4-2 | Lithium difluorophosphate | 0.3 | 15.8 | 74.9% | 14.7% |
| Example 4-3 | Lithium difluorophosphate | 0.4 | 15.4 | 74.9% | 14.9% |
| Example 4-4 | Lithium difluorophosphate | 0.5 | 15.2 | 74.7% | 15.2% |
| Example 4-5 | Lithium difluorophosphate | 0.6 | 15.0 | 74.7% | 15.4% |
| Note: "/" in Table 5 means that corresponding substance or parameter does not exist. | | | | | |

As can be seen from Table 5, if lithium difluorophosphate is added to the electrolyte and the mass percentage e of lithium difluorophosphate is 0.01%-1% based on the total mass of the electrolyte, the overall performance of the electrochemical apparatus will be high, and especially the charging speed of the electrochemical apparatus can be increased.

As can be known from a comparison between Example 4-1 and Example 4-5, when the mass percentage e of lithium difluorophosphate is 0.3%-0.6% based on the total mass of the electrolyte, the charging speed of the electrochemical apparatus is increased, without greatly affecting the high-temperature performance.

### Example 5-1

Example 5-1 is an improvement made based on Example 1-19, with a difference in that artificial graphite, as the negative electrode material, has different specific surface areas. See Table 6 for details.

**Table 6 Specific surface areas of artificial graphite and properties of electrochemical apparatuses**

| | f ($m^2/g$) | Charging speed (per min) | Cycling at 45°C | 4h storage at 85°C |
|---|---|---|---|---|
| | | | Capacity retention rate | Volume swelling rate |
| Example 1-19 | 4 | 16.5 | 75.1% | 14.3% |
| Example 5-1 | 1 | 17.5 | 74.1% | 13,2% |
| Example 5-2 | 2 | 17.2 | 74.4% | 13.8% |
| Example 5-3 | 3 | 16.8 | 74.9% | 14.1% |
| Example 5-5 | 5 | 16.3 | 74.8% | 14.7% |
| Example 5-6 | 6 | 16.2 | 74.3% | 15.0% |

As can be seen from Table 6, if the specific surface area of artificial graphite is within the range of 1 $m^2/g$-6 $m^2/g$, the overall performance of the electrochemical apparatus can be high. A larger specific surface area of artificial graphite means a higher charging speed of the electrochemical apparatus; and a smaller specific surface area of artificial graphite means better high-temperature performance of the electrochemical apparatus.

The described examples are some but not all of the examples of this application. The detailed description of the examples of this application is not intended to limit the protection scope of this application, but rather, to merely represent the selected examples of this application.

## Claims

1. An electrochemical apparatus, comprising a positive electrode plate, an electrolyte, and a negative electrode plate, wherein the electrolyte contains a linear carboxylate compound and a dinitrile compound, and the negative electrode plate comprises a negative electrode current collector and a negative electrode active material layer disposed on at least one surface of the negative electrode current collector; **characterized in that**,
based on total mass of the electrolyte, a mass percentage a of the linear carboxylate compound is 20% to 70% and a mass percentage b of the dinitrile compound is 0.01% to 7%; a bonding force between the negative electrode active material layer and the negative electrode current collector is a peeling strength F N/m, wherein the peeling strength F N/m is 5 N/m to 20 N/m; and

$$0.14 \leq (100b+F)/100a \leq 1.35.$$

2. The electrochemical apparatus according to claim 1, **characterized in that**, the electrochemical apparatus satisfies at least one of the following conditions:

a) a is 21% to 49%;
b) b is 1.1% to 4.9%;
c) F N/m is 7.1 N/m to 15.5 N/m; or
d)

$$0.21 \leq (100b+F)/100a \leq 0.39.$$

3. The electrochemical apparatus according to claim 2, **characterized in that**, the electrochemical apparatus satisfies at least one of the following conditions:

a) a is 36% to 43%;
b) b is 2.1% to 4.1%;
c) F N/m is 8.2 N/m to 13.7 N/m; or
d)

$$0.23 \leqslant (100b+F)/100a \leqslant 0.33.$$

4. The electrochemical apparatus according to any one of claims 1 to 3, **characterized in that**, the electrochemical apparatus satisfies at least one of the following conditions:

e) the linear carboxylate compound comprises at least one selected from the group consisting of ethyl acetate, methyl propionate, isopropyl formate, ethyl propionate, propyl acetate, isopropyl acetate, methyl butyrate, methyl isobutyrate, propyl propionate, isopropyl propionate, ethyl butyrate, ethyl isobutyrate, butyl acetate, isobutyl acetate, and fluorine-substituted products; or
f) the dinitrile compound comprises at least one selected from the group consisting of succinonitrile, glutaronitrile, adiponitrile, heptanedinitrile, octanedinitrile, 2-methylglutaronitrile, dipropylmalononitrile, and 1,2-bis(cyanoethoxy)ethane.

5. The electrochemical apparatus according to any one of claims 1 to 4, **characterized in that**, the electrochemical apparatus satisfies at least one of the following conditions:

g) the electrolyte contains succinonitrile and adiponitrile;
h) the electrolyte contains adiponitrile and 1,2-bis(cyanoethoxy)ethane; or
i) the electrolyte contains ethyl acetate and adiponitrile.

6. The electrochemical apparatus according to any one of claims 1 to 5, **characterized in that**, the electrolyte further contains a compound of formula I, wherein based on the total mass of the electrolyte, a mass percentage c of the compound of formula I is 0.04% to 0.8%, $0.01 \leq 10c/a \leq 0.2$ , and a structural formula of the compound of formula I is:

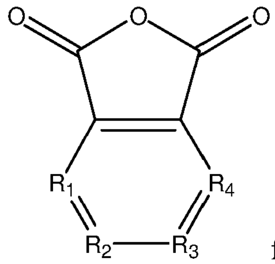 formula I;

wherein

$R_1$, $R_2$, $R_3$, and $R_4$ each are independently selected from N or C-$R_5$; $R_5$ is independently selected from hydrogen, substituted or unsubstituted C1-10 alkyl group, substituted or unsubstituted C2-10 alkenyl group, substituted or unsubstituted C2-10 alkynyl group, substituted or unsubstituted C6-10 aryl group, substituted or unsubstituted C3-10 alicyclic hydrocarbon group, substituted or unsubstituted C2-10 heterocyclic group, or substituted or unsubstituted C1-10 alkoxy group; and in the case of being substituted, a substituent group is selected from halogen.

**7.** The electrochemical apparatus according to claim 6, **characterized in that**, $0.08 \leq 10c/a \leq 0.2$.

**8.** The electrochemical apparatus according to any one of claims 1 to 7, **characterized in that**, the compound of formula I comprises at least one selected from the group consisting of following compounds:

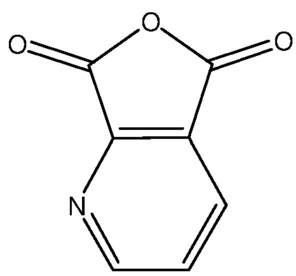 formula I-1, 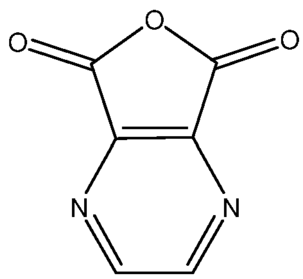 formula I-2,

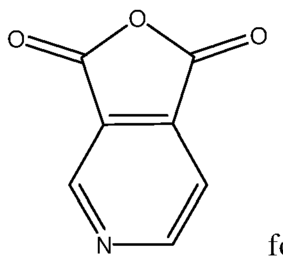 formula I-3,

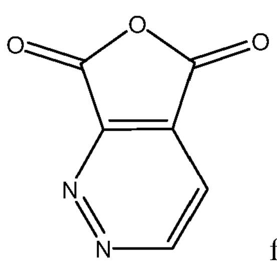 formula I-4, and 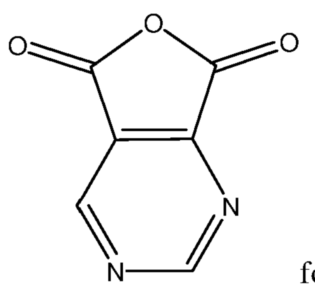 formula I-5.

**9.** The electrochemical apparatus according to any one of claims 1 to 8, **characterized in that**, the electrolyte further contains a trinitrile compound, wherein based on the total mass of the electrolyte, a mass percentage d of the trinitrile compound is 0.01%-5%, $0.0014 \leq d/b \leq 3$, and the trinitrile compound comprises at least one selected from the group consisting of 1,3,5-pentanetricarbonitrile, 1,3,6-hexanetricarbonitrile, 1,2,6-hexanetricarbonitrile, and 1,2,3-tris(2-cyanooxy)propane.

**10.** The electrochemical apparatus according to claim 9, **characterized in that**, $1.5 \leq d/b \leq 3$.

**11.** The electrochemical apparatus according to any one of claims 1 to 10, **characterized in that**, the electrolyte further contains adiponitrile and 1,3,6-hexanetricarbonitrile.

**12.** The electrochemical apparatus according to any one of claims 1 to 11, **characterized in that**, the electrolyte further contains lithium difluorophosphate, and based on the mass of the electrolyte, a mass percentage of the lithium difluorophosphate e is 0.01% to 1%.

**13.** The electrochemical apparatus according to any one of claims 1 to 12, **characterized in that**, e is 0.2% to 0.4%.

**14.** The electrochemical apparatus according to any one of claims 1 to 13, wherein the negative electrode active material layer comprises a negative electrode material, a binder, and a conductive agent, **characterized in that**, the electrochemical apparatus satisfies at least one of the following conditions:

j) the negative electrode material comprises graphite, wherein a specific surface area f of the graphite is 1 $m^2/g$-6 $m^2/g$; or
k) the binder comprises at least one of styrene butadiene rubber, fluorinated rubber, polyacrylonitrile, polyacrylic acid, polyacrylate, polyvinyl alcohol, polytetrafluoroethylene, or polyolefin.

**15.** An electric device, **characterized in that**, the electric device comprises the electrochemical apparatus according to any one of claims 1 to 14.

Europäisches Patentamt
European Patent Office
Office européen des brevets

# EUROPEAN SEARCH REPORT

Application Number
EP 24 16 7894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/052319 A1 (WANG KEFEI [CN]) 17 February 2022 (2022-02-17) * paragraph [0222]; table 5 * ----- | 1-15 | INV. H01M4/133 H01M4/587 H01M4/62 H01M10/0525 H01M10/0567 H01M10/0568 H01M10/42 |
| X | WO 2023/123026 A1 (NINGDE AMPEREX TECHNOLOGY LTD [CN]) 6 July 2023 (2023-07-06) * page 18; table 1 * ----- | 1-15 | |
| A | EP 3 907 801 A1 (NINGDE AMPEREX TECHNOLOGY LTD [CN]) 10 November 2021 (2021-11-10) * paragraph [0111]; claim 6 * ----- | 1-15 | ADD. H01M4/02 |
| A | CN 116 031 411 A (NINGDE AMPEREX TECHNOLOGY LTD) 28 April 2023 (2023-04-28) * example 1-1; paragraph [0036] * ----- | 1-15 | |

TECHNICAL FIELDS SEARCHED (IPC)
H01M

The present search report has been drawn up for all claims

2

| Place of search | Date of completion of the search | Examiner |
|---|---|---|
| Munich | 6 September 2024 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 16 7894

This annex lists the patent family members relating to the patent documents cited in the above-mentioned European search report. The members are as contained in the European Patent Office EDP file on
The European Patent Office is in no way liable for these particulars which are merely given for the purpose of information.

06-09-2024

| Patent document cited in search report | Publication date | Patent family member(s) | Publication date |
|---|---|---|---|
| US 2022052319 A1 | 17-02-2022 | EP 4020622 A1 | 29-06-2022 |
| | | JP 7371241 B2 | 30-10-2023 |
| | | JP 2022550425 A | 01-12-2022 |
| | | KR 20220047662 A | 18-04-2022 |
| | | US 2022052319 A1 | 17-02-2022 |
| | | WO 2021174410 A1 | 10-09-2021 |
| WO 2023123026 A1 | 06-07-2023 | CN 115398700 A | 25-11-2022 |
| | | WO 2023123026 A1 | 06-07-2023 |
| EP 3907801 A1 | 10-11-2021 | CN 109301326 A | 01-02-2019 |
| | | DK 3627606 T3 | 10-01-2022 |
| | | DK 3910714 T3 | 18-09-2023 |
| | | EP 3627606 A1 | 25-03-2020 |
| | | EP 3907801 A1 | 10-11-2021 |
| | | EP 3910714 A1 | 17-11-2021 |
| | | EP 4235900 A2 | 30-08-2023 |
| | | EP 4362162 A2 | 01-05-2024 |
| | | EP 4362163 A2 | 01-05-2024 |
| | | EP 4383396 A2 | 12-06-2024 |
| | | EP 4404322 A2 | 24-07-2024 |
| | | EP 4428976 A1 | 11-09-2024 |
| | | ES 2902422 T3 | 28-03-2022 |
| | | ES 2955407 T3 | 30-11-2023 |
| | | FI 3910714 T3 | 06-09-2023 |
| | | HU E063500 T2 | 28-01-2024 |
| | | PL 3627606 T3 | 07-03-2022 |
| | | PL 3910714 T3 | 15-04-2024 |
| | | US 2020099098 A1 | 26-03-2020 |
| | | US 2021028489 A1 | 28-01-2021 |
| | | US 2021028490 A1 | 28-01-2021 |
| | | US 2022407108 A1 | 22-12-2022 |
| | | US 2022407109 A1 | 22-12-2022 |
| | | US 2023102805 A1 | 30-03-2023 |
| | | US 2023128988 A1 | 27-04-2023 |
| | | US 2023335794 A1 | 19-10-2023 |
| | | US 2023352734 A1 | 02-11-2023 |
| | | US 2024250300 A1 | 25-07-2024 |
| | | US 2024258565 A1 | 01-08-2024 |
| | | US 2024258566 A1 | 01-08-2024 |
| | | US 2024266603 A1 | 08-08-2024 |
| | | US 2024291032 A1 | 29-08-2024 |
| CN 116031411 A | 28-04-2023 | NONE | |

EPO FORM P0459

For more details about this annex : see Official Journal of the European Patent Office, No. 12/82